# EUROPEAN PATENT SPECIFICATION

(11) **EP 1 803 974 B1**
(45) Date of publication and mention of the grant of the patent: **16.02.2011**
(21) Application number: 06011104.4
(22) Date of filing: 30.05.2006
(51) Int. Cl.: F16H 55/08, B21K 1/30

(54) **Gear wheel with chamfered portions**
Zahnrad mit Fasen
Roue dentée chanfreinée

(30) Priority: 28.12.2005 JP 2005379604
(43) Date of publication of application: 04.07.2007
(73) Proprietor: O-OKA Corporation, Toyota-shi Aichi-ken (JP)
(72) Inventor: O-Oka, Mitsushige, Toyota-shi Aichi-ken (JP); Kawasaki, Yoshiki, Toyota-shi Aichi-ken (JP); Hoguchi, Tetsuya, Toyota-shi Aichi-ken (JP); Tsujimoto, Hiroshi, Toyota-shi Aichi-ken (JP)
(74) Representative: Kramer - Barske - Schmidtchen

(56) References cited:
- EP-A- 1 524 043
- JP-A- 10 211 539
- JP-A- 2001 219 240
- US-A1- 2004 231 447

## Description

### BACKGROUND OF THE INVENTION

### Field of the Invention

The present invention relates to a gear in which chamfered portions shaped by forging are formed on the respective ridge line portions at intersections between tooth bottom lands, tooth flanks, and a tooth tip land of the gear and end faces in the axial direction of the gear.

### Description of the Related Art

In the conventional gears (Japanese Patent Application Laid-Open No. 10-026214), burrs caused by hobbing are removed by applying machining such as cutting to portions corresponding to the tooth flanks and other end faces in the axial direction of a hobbed gear material.

In the conventional gears, to portions corresponding to the tooth flanks and other end faces in the axial direction of a hobbed gear material, machining such as cutting is applied for removing burrs caused by hobbing, and fiber flows are cut at the cutting end faces, and this lowers the strength.

Also in the conventional gears, an exclusive machining process is necessary only for chamfering a hobbed gear material by machining, so that this hinders the productivity.

Furthermore, in the conventional gears, to prevent dents caused during forging of a gear from harmfully influencing engagement, burnishing is added depending on the circumstances, however, the shaped tooth flanks are engaged with each other and this lowers the quality of the gears.

Furthermore, gears with forged chamfered portions are known from US 2004/231447 A1, JP 2001 219 240 A, EP-A-1524043 and JP 10211539 A.

The document US 2004/231447 A1 is considered as being the closest prior art revealing all features of the preambule of claim 1.

### SUMMARY OF THE INVENTION

It is an object of the present invention to provide a gear which does not require machining such as cutting to remove burrs caused by hobbing in the conventional techniques.

It is another object of the present invention to provide a gear which reduces machining cost while preventing lowering in strength

It is a further object of the present invention to provide a gear in which forged chamfered portions were formed on the respective ridge line portions at intersections between the tooth bottom lands, tooth flanks, and a tooth tip land of a gear and the end faces in the axial direction of the gear.

It is a still further object of the present invention to provide a gear in which forged chamfered portions are formed on the respective ridge line portions at intersections between tooth bottom lands, tooth flanks, and a tooth tip land of the gear and end faces in the axial direction of the gear.

It is a yet further object of the present invention to provide a gear in which forged chamfered portions are further formed on straight ridge line portions between the tooth bottom lands and the tooth flanks of the gear.

It is a yet further object of the present invention to provide a gear in which forged chamfered portions are further formed on straight ridge line portions between the tooth flanks and the tooth tip land of the gear.

It is another object of the present invention to provide a gear in which forged chamfered portions are further formed on ridge line portions at intersections between the forged chamfered portions between the tooth bottom lands and the tooth flanks of the gear and end faces in the axial direction of the gear.

It is a further object of the present invention to provide a gear in which forged chamfered portions are further formed on ridge line portions at intersections between the forged chamfered portions between the tooth flanks and the tooth tip land of the gear and end faces in the axial direction of the gear.

It is a still further object of the present invention to provide a gear in which the forged chamfered portions formed on ridge line portions at intersections between the tooth bottom lands, the tooth flanks, and the tooth tip land of the gear and the end faces in the axial direction of the gear are respectively formed by round chamfering.

It is a yet further object of the present invention to provide a gear in which the curvatures of the round chamfering are different from each other.

It is a yet further object of the present invention to provide a gear in which joint portions between forged chamfered portions adjacent to each other formed on ridge line portions at intersections between the tooth bottom lands, the tooth flanks, and the tooth tip land of the gear and the end faces in the axial direction of the gear are formed at a curvature that is gradually changed.

It is another object of the present invention to provide a gear in which the gear is formed by forging a material shaped so as to increase a tooth width of the gear toward the tooth tip, and inserted into a die having chamfered portions for forge-shaping chamfered portions on the respective ridge line portions at intersections between the tooth bottom lands, the tooth flanks, and the tooth tip land and end faces in the axial direction of the gear.

It is a further object of the present invention to provide a gear in which round forged chamfered portions are formed on the respective ridge line portions at intersections between tooth bottom lands, tooth flanks, and a tooth tip land of the gear to be shaped by forging and end faces in the axial direction of the gear.

These objects can be solved by a gear according to claim 1. Preferred embodiments are defined by the dependent claims.

In the gear according to claim 1 of the present invention, forged chamfered portions are formed on the respective ridge line portions at intersections between tooth bottom lands, tooth flanks, and a tooth tip land of the gear and end faces in the axial direction of the gear. Therefore, machining such as cutting to remove burrs caused by hobbing in the conventional techniques is not necessary, so lowering in strength is prevented, and a machining cost reduction effect is obtained.

In the gear according to the present invention, forged chamfered portions are further formed on straight ridge line portions between the tooth bottom lands and the tooth flanks of the gear. Therefore, an effect is obtained that stress concentration between the tooth bottom lands and the tooth flanks of the gear is avoided.

In the gear according to the present invention, forged chamfered portions are further formed on straight ridge line portions between the tooth flanks and the tooth tip land of the gear. Therefore, an effect is obtained that stress concentration between the tooth bottom lands and the tooth flanks of the gear is avoided.

In the gear according to the present invention, forged chamfered portions are further formed on ridge line portions at intersections between the forged chamfered portions between the tooth bottom lands and the tooth flanks of the gear and end faces in the axial direction of the gear. Therefore, an effect is obtained that stress concentration on the end faces in the axial direction of the chamfered portions formed by forging between the tooth bottom lands and the tooth flanks of the gear is avoided.

In the gear according to the present invention, forged chamfered portions are further formed on ridge line portions at intersections between the forged chamfered portions between the tooth flanks and the tooth tip land of the gear and end faces in the axial direction of the gear. Therefore, an effect is obtained that stress concentration on the end faces in the axial direction of the chamfered portions formed by forging between the tooth bottom lands and the tooth flanks of the gear is avoided.

In the gear according to the present invention, the forged chamfered portions formed on ridge line portions at intersections between the tooth bottom lands, the tooth flanks, and the tooth tip land of the gear and the end faces in the axial direction of the gear are respectively formed by round chamfering. Therefore, at the chamfered portions, the intervals of fiber flows become narrow in a state that the fiber flows are parallel to each other, so that the texture becomes dense, and an effect is obtained that resistance against stress concentration is increased.

In the gear according to the present invention, the curvatures of the round chamfering are different from each other. Therefore, an effect is obtained that stress concentration on joint portions between the chamfered portions adjacent to each other is avoided.

In the gear according to the present invention, joint portions between forged chamfered portions adjacent to each other formed on ridge line portions at intersections between the tooth bottom lands, the tooth flanks, and the tooth tip land of the gear and the end faces in the axial direction of the gear are formed at a curvature that is gradually changed. Therefore, an effect is obtained that stress concentration on joint portions between the chamfered portions adjacent to each other is avoided.

In the gear according to the present invention, the gear is formed by forging a material shaped so as to increase a tooth width of the gear toward the tooth tip, and inserted into a die having chamfered portions for forge-shaping chamfered portions on the respective ridge line portions at intersections between the tooth bottom lands, the tooth flanks, and the tooth tip land and end faces in the axial direction of the gear. Therefore, an effect is obtained that the density is made even across the entirety of each tooth to uniform strength is secured.

In the gear according to the present invention, round forged chamfered portions are formed on the respective ridge line portions at intersections between tooth bottom lands, tooth flanks, and a tooth tip land of the gear to be shaped by forging and end faces in the axial direction of the gear. Therefore, an effect is obtained that the entire strength of the gear is increased, the texture becomes dense at the respective chamfered portions because the intervals of fiber flows become narrow in a state that the fiber flows are parallel to each other, the resistance against stress concentration is increased, and also, machining such as cutting to remove burrs caused by hobbing in the conventional techniques is not necessary, so that lowering in strength is prevented and the machining cost is reduced.

In a gear not having all features of the present invention, the respective chamfered portions formed on the respective ridge line portions at intersections between the tooth bottom lands, the tooth flanks, and the tooth tip land of the gear and end faces in the axial direction of the gear are formed by round chamfering at a predetermined constant curvature. Therefore, chamfered portions on the corresponding portions in a die are respectively formed by round chamfering at a predetermined constant curvature, so that an effect is obtained that die design becomes easy and the die cost is reduced.

In the gear not having all features of the present invention, joint portions between chamfered portions adjacent to each other formed on the respective ridge line portions at intersections between the tooth bottom lands, the tooth flanks, and the tooth tip land of the gear and end faces in the axial direction of the gear are formed by round chamfering at a predetermined constant curvature. Therefore, chamfered portions on the corresponding portions in a die are formed by round chamfering at a predetermined constant curvature, respectively, so that an effect is obtained in that die design becomes easy and the die cost is reduced.

### BRIEF DESCRIPTION OF THE DRAWINGS

FIG.1 is a perspective view showing the main portion of the gear according to the first embodiment not having all features of the present invention;
FIG.2 is a perspective view showing the main portion of the gear according to the second embodiment not having all features of the present invention;
FIGS.3A-3C are perspective views and edge view wholly showing the gear according to the second embodiment not having all features of the present invention;
FIG.4 is a partially cutaway perspective view of the gear according to the second embodiment not having all features of the present invention;
FIG.5 is an enlarged perspective view of the section surrounded by the circle D (shown in Fig. 3C) in the gear according to the second embodiment not having all features of the present invention;
Figs. 6A-6D are enlarged partially cut away perspective views of the section B of Fig. 4 and sectional views respectively along the H-H line, along the G-G line, and along the F-F line in Fig. 6A in the gear according to the second embodiment not having all features of the present invention;
Fig. 7 is a perspective view wholly showing a die for shaping the gear according to the second embodiment not having all features of the present invention by forging;
FIG. 8 is a development of an upper die, a lower die and the forged work gear according to the second embodiment not having all features of the present invention;
FIG. 9 is an enlarged perspective view of the portion E of the die in the Fig. 7;
FIG. 10 is an enlarged partially cut away perspective view of the die along with A-A in Fig. 8 according to the second embodiment not having all features of the present invention;
FIGS.11A-11D are enlarged perspective views of the portion B of the die in Fig. 10 according to the second embodiment not having all features of the present invention;
FIG.12 is a process chart showing hot forging process in the manufacturing method according to the present invention;
FIG. 13 is a process chart showing cold forging process in the manufacturing method according to the present invention;
FIG. 14 is a partially enlarged perspective view of the gear according to the third embodiment of the present invention;
FIG. 15 is a partially enlarged perspective view of the die according to the third embodiment of the present invention;
Fig. 16 is a sectional view explaining uniform impregnation of the material in the die according to the third embodiment of the present invention;
Figs. 17A-17C are explanatory drawings explaining fiber flows and density of the texture according to the third embodiment of the present invention;
Fig. 18 is a perspective view showing the main portion of the gear according to the fourth embodiment not having all features of the present invention; and
Fig. 19 is a perspective view showing the main portion of the gear according to the fifth embodiment of the present invention.

### DESCRIPTION OF THE PREFERRED EMBODIMENTS

### First Embodiment

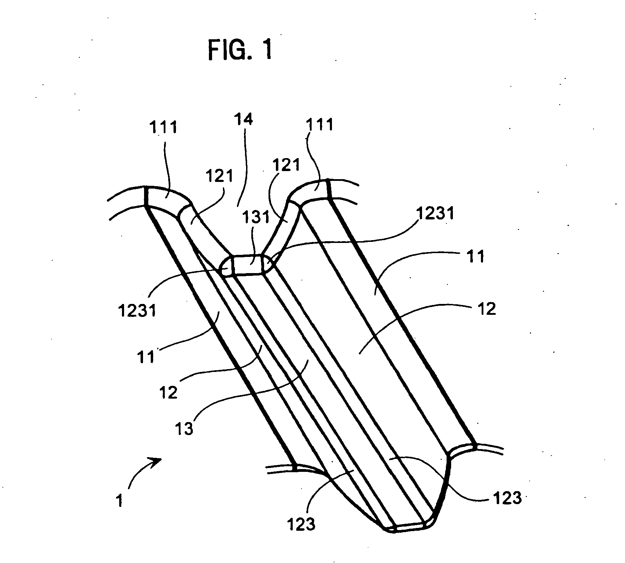

In a gear according to a first embodiment not having all features of the present invention, as shown in Fig. 1, on the respective ridge line portions at the respective intersections between tooth bottom lands 11, tooth flanks 12, and a tooth tip land 13 of a gear 1 shaped by forging and end faces 14 in the axial direction of the gear, round chamfered portions 111, 121, and 131 shaped by forging are formed.

The gear is formed of a helical gear including, as shown in Fig. 1, the tooth bottom lands (root surfaces) 11 of the gear 1 are formed into rectangular arched shapes symmetrical about a lowest point, the tooth flanks 12 in contact with the tooth bottom lands 11 are formed into gently arched rectangular shapes, and the tooth top land 13 in contact with the tooth flanks 12 is formed into a flat rectangular shape.

In the gear as shown in Fig. 1, on the straight ridge line portions between the tooth flanks 12 and the tooth tip land 13 of the gear 1, chamfered portions 123 shaped by forging are formed.

In the gear, as shown in Fig. 1, on the ridge line portions at the intersections of the chamferedportions 123 shaped by forging between the tooth flanks 12 and the tooth tip land 13 of the gear 1 and the end faces 14 in the axial direction of the gear, forged chamfered portions 1231 are formed.

In the gear, as shown in Fig. 1, chamfered portions 111, 121, and 131 adjacent to each other formed on the respective ridge line portions at intersections between the tooth flanks 12 and the tooth tip land 13 of the gear 1 and the end faces 14 in the axial direction of the gear are formed by round chamfering at the respective predetermined constant curvatures.

In the gear, as shown in Fig. 1, joint portions 1231 of chamfered portions adjacent to each other formed on the respective ridge line portions at intersections between the tooth flanks 12 and the tooth tip land 13 of the gear 1 and the end faces 14 in the axial direction of the gear are formed at the same predetermined constant curvature as that of the chamfered portions 111, 121, 131 adjacent to each other.

In the gear with the above-described configuration, the chamfered portions 111, 121, and 131 shaped by forging are formed on the respective ridge line portions at the respective intersections between the tooth bottom lands 11, the tooth flanks 12, and the tooth tip land 13 of the gear 1 and the end faces 14 in the axial direction of the gear, so that machining such as cutting to remove burrs caused by hobbing in the conventional techniques is not necessary, and therefore, an effect is obtained that lowering in strength is prevented and the machining cost is reduced.

In addition, in the gear according to the first embodiment chamfered portions 123 shaped by forging are formed on the straight ridge line portions between the tooth flanks 12 and the tooth tip land 13 of the gear 1, so that an effect is obtained that stress concentration between the tooth flanks 12 and the tooth tip land 13 of the gear is avoided.

Furthermore, in the gear the tooth bottom lands of the gear are formed into arched rectangular shapes symmetrical about a lowest point and are smoothly connected to the tooth flanks, so that an effect is obtained that stress concentration between the tooth bottom lands 11 and the tooth flanks 12 of the gear is avoided.

In addition, in the gear chamfered portions 1231 shaped by forging are formed on the ridge line portions at the intersections between the chamfered portions 123 shaped by forging between the tooth flanks 12 and the tooth tip land 13 of the gear and the end faces 14 in the axial direction of the gear, so that an effect is obtained that stress concentration on the end faces in the axial direction of the forged chamfered portions between the tooth flanks 12 and the tooth tip land 13 of the gear is avoided.

Furthermore, in the gear and a manufacturing apparatus and a manufacturing method for the same, the respective chamfered portions 111, 121, and 131 formed on the respective ridge line portions at the intersections between the tooth bottom lands 11, the tooth flanks 12, and the tooth tip land 13 of the gear and the end faces 14 in the axial direction of the gear are respectively formed by round chamfering at a predetermined constant curvature, and the respective chamfered portions on the corresponding portions in a die are respectively formed by round chamfering at a predetermined constant curvature, so that an effect is obtained that die design becomes easy and the die cost is reduced.

In addition, in the gear the joint portions 1231 of the chamfered portions 121 and 131 adjacent to each other formed on the respective ridge line portions at the intersections between the tooth flanks 12 and the tooth tip land 13 of the gear and the end faces 14 in the axial direction of the gear are respectively formed by round chamfering at a predetermined constant curvature, and chamfered portions of the corresponding portions of the die are respectively formed by round chamfering at a predetermined constant curvature, so that die design becomes easy and the die cost is reduced.

### Second Embodiment

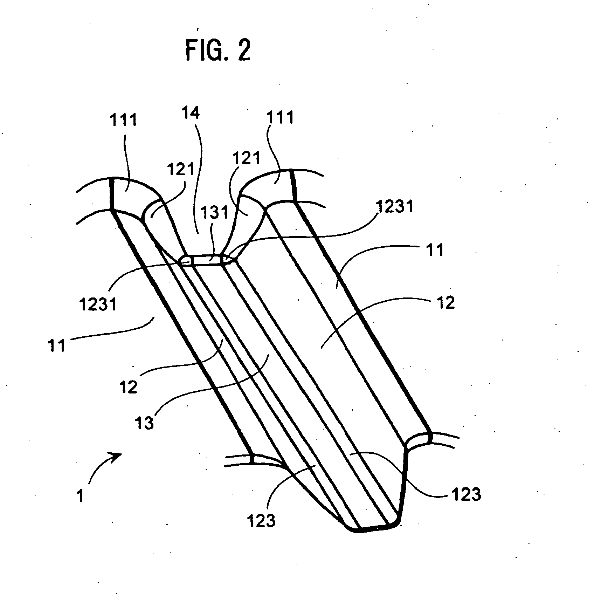

A gear according to a second embodiment not having all features of the present invention is different from the above-described first embodiment in that, mainly, as shown in Fig. 2 through Fig. 13, the respective chamfered portions 111, 121, and 131 formed on the respective ridge line portions at the intersections between the tooth bottom lands 11, the tooth flanks 12, and the tooth tip land 13 of the gear 1 and the end faces 14 in the axial direction of the gear are formed by round chamfering at curvatures different from each other. The following explanation is given mainly about the difference.

In the gear, as shown in Fig. 2, joint portions 1231 of chamfered portions 121 and 131 adjacent to each other formed on the respective ridge line portions at the intersections between the tooth flanks 12 and the tooth tip land 13 of the gear 1 and the end faces 14 in the axial direction of the gear are formed at a curvature that is gradually changed.

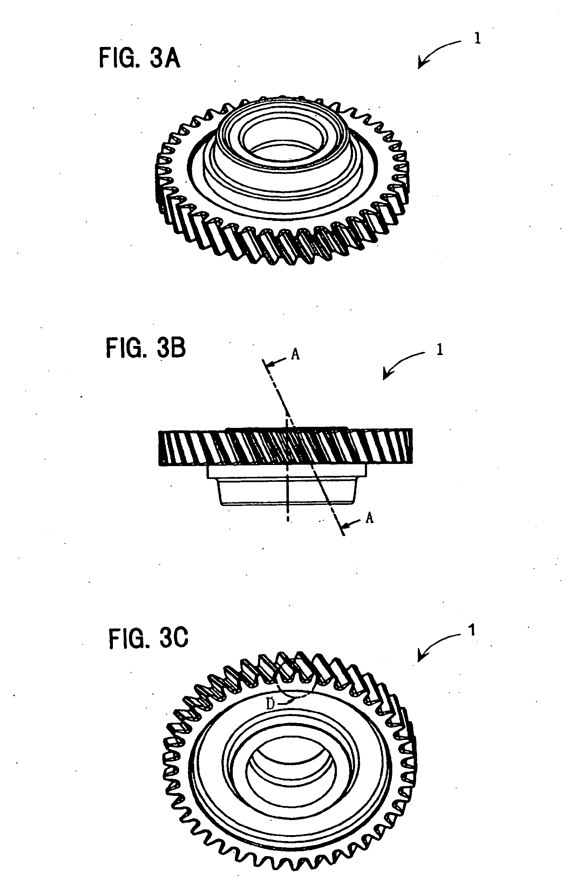

The gear is a helical gear having helical teeth on the outer circumferential surface of the gear as wholly shown in Fig.3A through Fig. 3C.

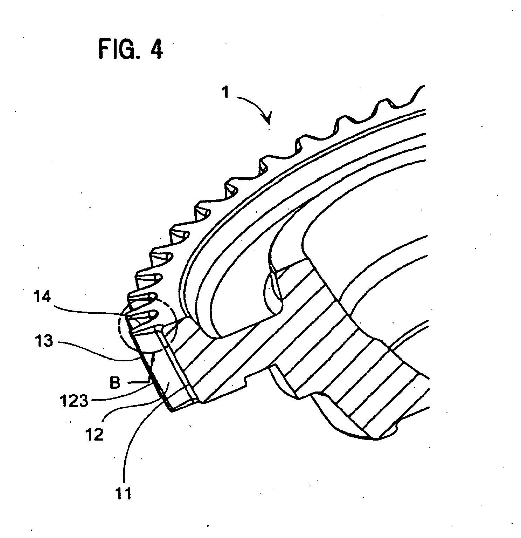

Fig. 4 is a partially cutaway perspective view of the gear along the A-A line on the tooth flank shown in Fig. 3B.

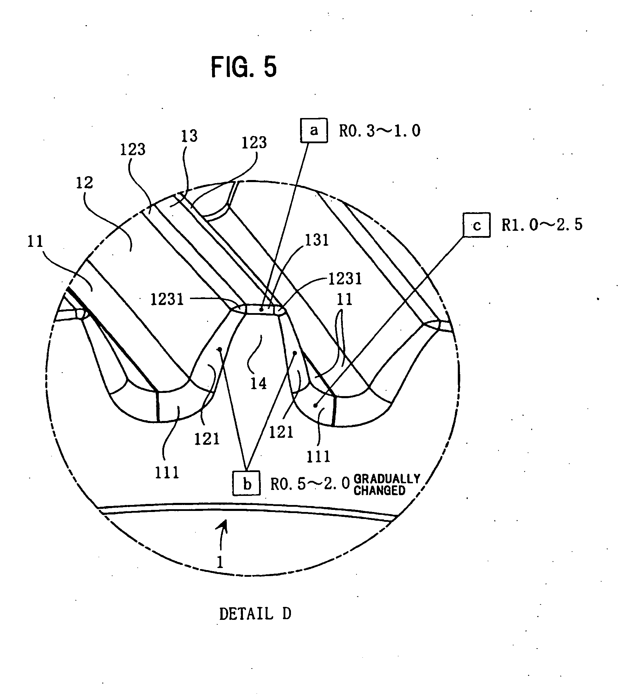

Fig. 5 is an enlarged perspective view of the section surrounded by the circle D in the gear shown in Fig. 3C, and the respective chamfered portions 111, 121, and 131 formed on the respective ridge line portions at the intersections between the tooth bottom lands 11, the tooth flanks 12, and the tooth tip land 13 of the gear 1 and the end faces 14 in the axial direction of the gear are respectively formed by round chamfering at curvatures in the ranges of R1.0 through 2.5, R0.5 through 2.0, and R0.3 through 1.0.

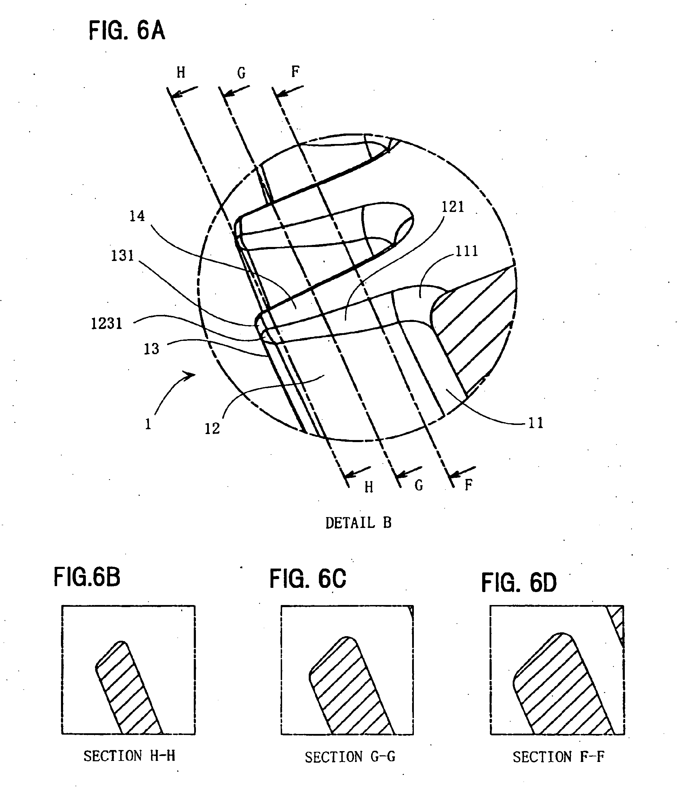

Fig. 6A is an enlarged perspective view of the section surrounded by the circle B of Fig. 4 in the gear, partially cut away along the A-A line of Fig. 3B. And sectional views along the H-H line close to the tooth bottom land, along the G-G line at the center of the tooth flank, and along the F-F line close to the tooth tip land in Fig. 6A are respectively shown in Fig. 6B, Fig. 6C, and Fig. 6D.

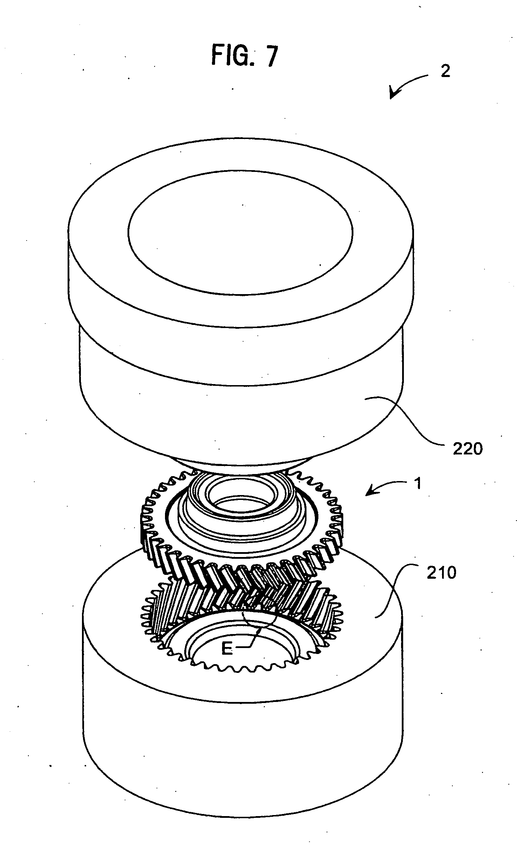

Fig. 7 is a perspective view of a die 2 constituting a manufacturing apparatus for shaping the gear by forging.

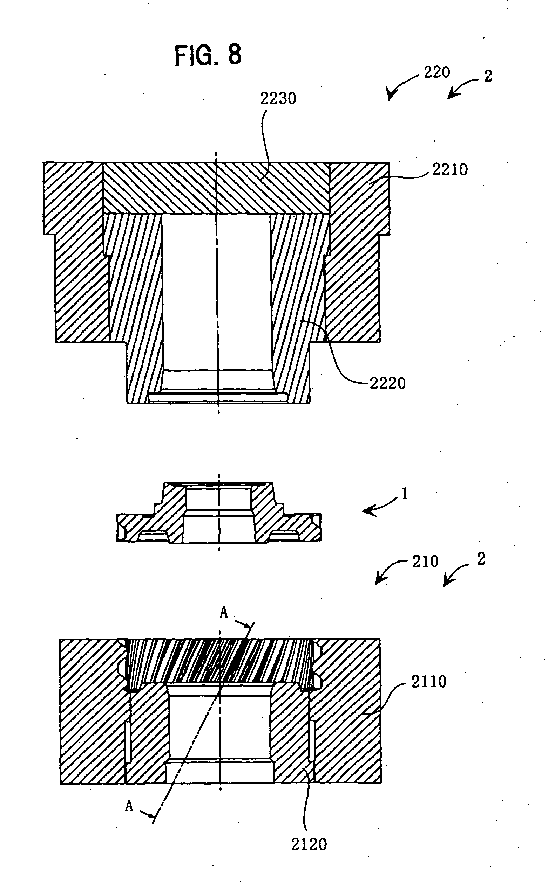

The die 2 includes, as shown in Fig. 7 and Fig. 8, a lower die 210 and an upper die 220, and the lower die 210 includes an outer circumferential portion 2110 and an inner circumferential portion 2120, and the upper die 220 includes an outer circumferential portion 2210, an inner circumferential lower portion 2220, and an inner circumferential upper portion 2230.

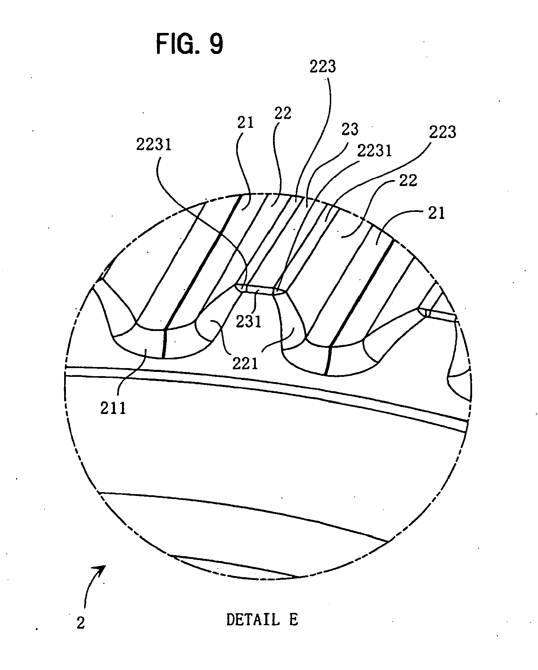

Fig. 9 is an enlarged perspective view of the section surrounded by the circle E of Fig. 7 in the lower die 210 shown in Fig. 7. In the die, chamfered portions 211 corresponding to the tooth bottom land forming portions 21 for forming the tooth bottom lands 11, chamfered portions 221 corresponding to tooth flank forming portions 22 for forming the tooth flanks 12, and a chamfered portion 231 corresponding to a tooth tip land forming portion 23 for forming the tooth tip land 13 are formed for shaping the chamfered portions 111, 121, and 131 by forging on ridge line portions at intersections between the tooth bottom lands 11, the tooth flanks 12, and the tooth tip land 13 of the gear 1 and end faces 14 in the axial direction of the gear. A chamfered portion 2231 is formed between the chamfered portion 221 and the chamfered portion 231.

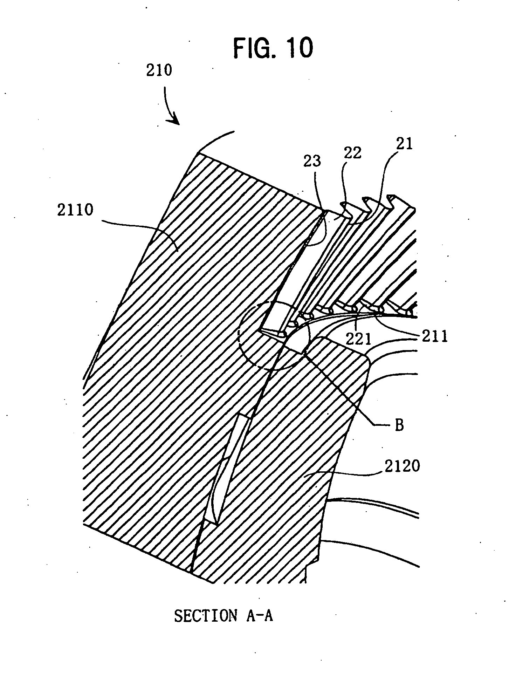

Fig. 10 is a sectional view partially cut away along the A-A line on the tooth flank in the lower die 210 of Fig. 8.

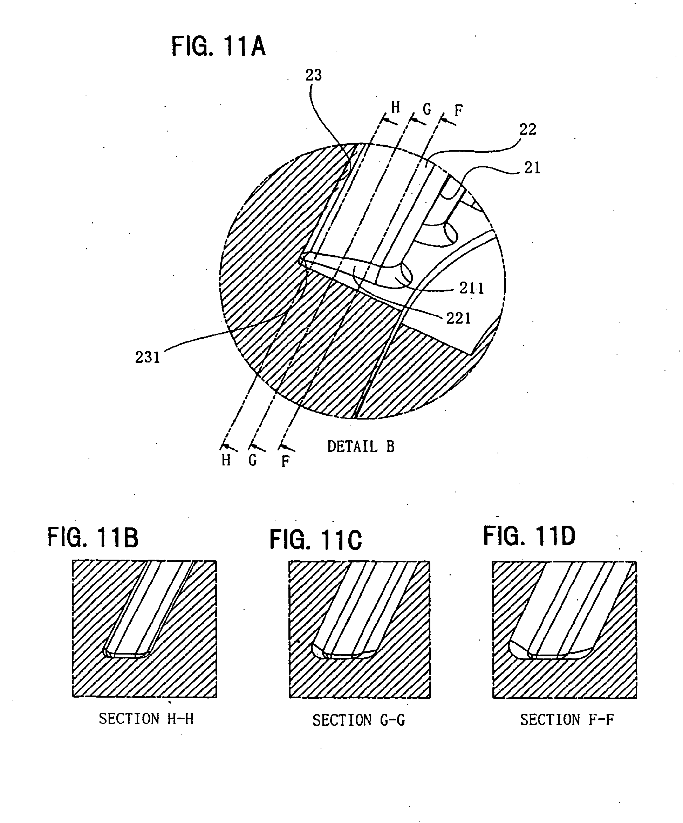

Fig. 11A is an enlarged perspective view of the section surrounded by the circle B in the lower die for forge-shaping the partially cutaway gear shown in Fig. 10, and sectional views along the H-H line close to the tooth bottom land, along the G-G line at the center of the tooth flank, and along the F-F line close to the tooth tip land in Fig. 11A are respectively shown in Fig. 11B, Fig. 11C, and Fig. 11D.

Next, processes of shaping a gear and tooth flanks in the manufacturing method for manufacturing the gear according to the present invention will be explained.

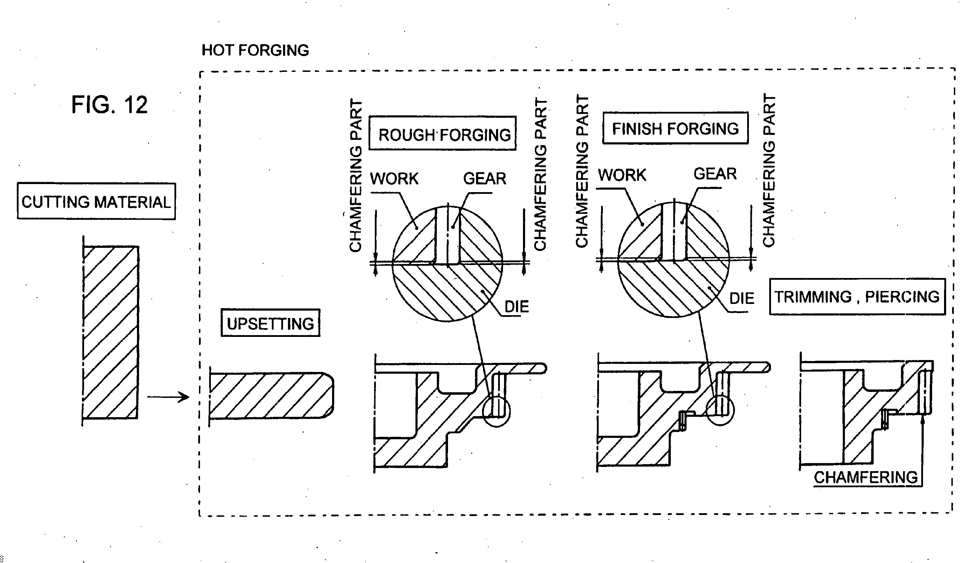

The material is upset-shaped in the process of hot forging as shown in Fig. 12, and then rough-forged and then finish-forged.

In the rough forging and finish forging in the hot forging process, as shown in Fig. 12, chamfered portions are formed in the die so that the chamfered portions of the die are transferred onto a work by forging. The rough forging and finish forging can be applied in one process as appropriate, or rough forging or finish forging can be omitted.

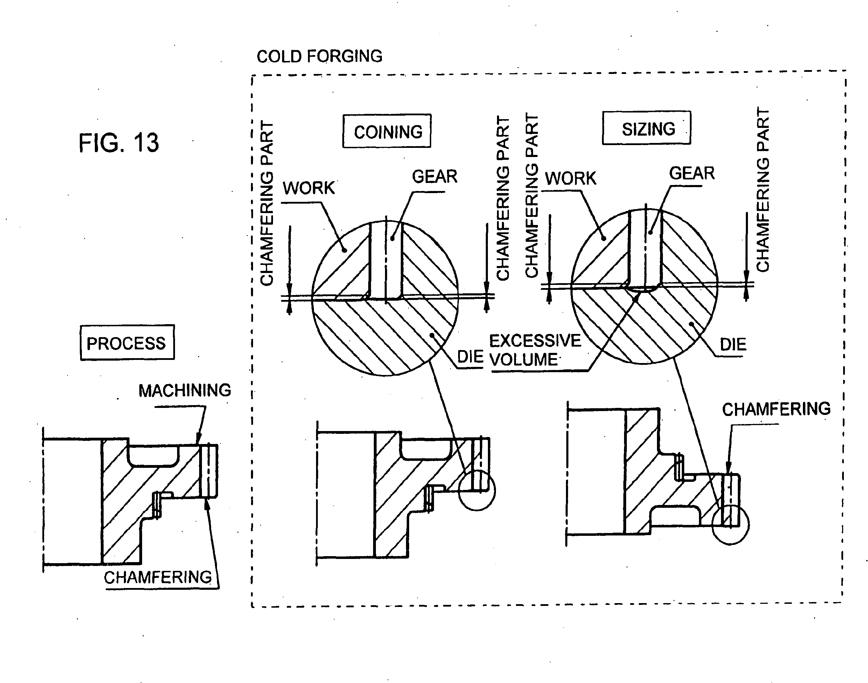

The finish-forged work is subjected to trimming and piercing, and after the end faces thereof are machined as shown in Fig. 13, in a cold forging process, cold coining is performed, and according to volume calculation, the chamfered portions are simultaneously filled when the coining is completed.

Furthermore, in a cold sizing process, the gear as a work is inserted into a die by switching the upper side and the lower side of the gear, and subjected to round chamfering, and excessive volume is moved to the end face sides as excess thicknesses because chamfering preliminary shaping is not applied as a preprocess.

In the gear according to the second embodiment not having all features of the present invention with the above-described configuration, the respective chamfered portions 111, 121, and 131 formed on the respective ridge line portions at intersections between the tooth bottom lands 11, the tooth flanks 12, and the tooth tip land 13 of the gear and the end faces 14 in the axial direction of the gear are formed by round chamfering at curvatures different from each other, so that fiber flows of the respective chamfered portions become narrow in intervals in a state that they are parallel to each other, and the texture thereof becomes dense, whereby an effect is obtained that resistance against stress concentration is increased.

In addition, in the gear according to the second embodiment not having all features of the present invention, joint portions 1231 between the chamfered portions 121 and 131 adjacent to each other formed on the respective ridge line portions at the intersections between the tooth flanks 12 and the tooth tip land 13 of the gear and the end faces in the axial direction of the gear are formed at a curvature that is gradually changed, whereby an effect is obtained that stress concentration on the joint portions of the adjacent chamfered portions is avoided.

Furthermore, in the gear, manufacturing method and apparatus according to the second embodiment not having all features of the present invention, the gear is formed by forging a material shaped so as to increase the tooth width of the gear toward the tooth tip, and inserted into a die that has chamfered portions for forge-shaping the chamfered portions on the respective ridge line portions at the intersections between the tooth bottom lands, the tooth flanks, and the tooth tip land of the gear and the end faces in the axial direction of the gear, whereby an effect is obtained that the density is made even across the entirety of each tooth to uniform strength.

In addition, in the gear, manufacturing method and apparatus for the gear according to the second embodiment not having all features, round forged chamfered portions are formed at the respective ridge line portions at the intersections between the tooth bottom lands, the tooth flanks, and the tooth tip land of the gear to be shaped by forging and the end faces in the axial direction of the gear, so that the strength of the entire gear is increased, fiber flows become narrow in intervals at the respective chamfered portions in a state that they are parallel to each other, and this makes the texture dense and increases resistance against stress concentration, and machining such as cutting to remove burrs caused by hobbing in the conventional techniques is not necessary, and therefore, an effect is obtained that lowering in strength is prevented and the machining cost is reduced.

### Third Embodiment

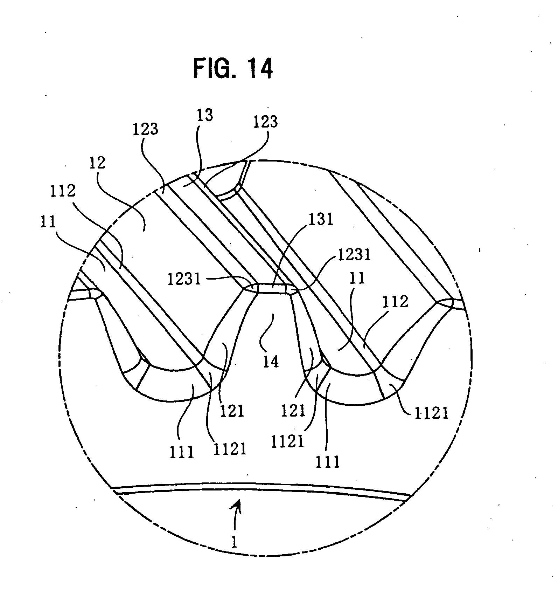

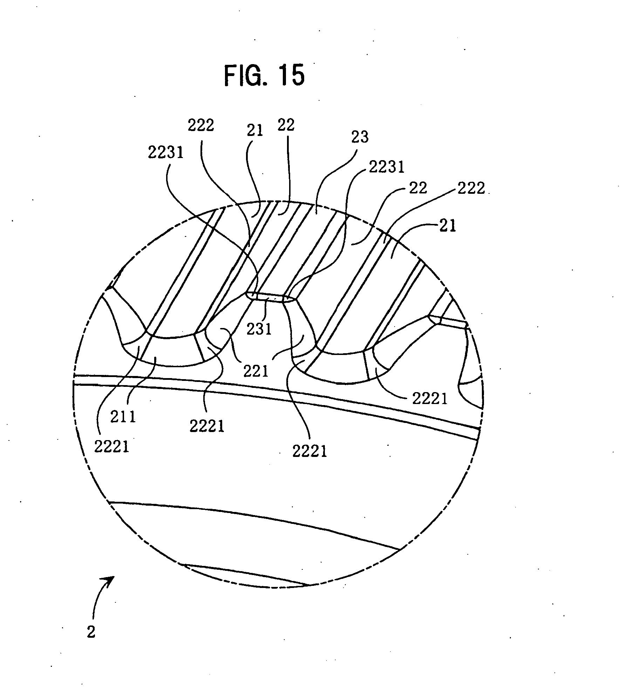

A gear according to a third embodiment of the present invention is different from the above-described second embodiment in that, mainly, as shown in Fig. 14 and Fig. 15, the chamfered portions 112 shaped by forging between the tooth bottom lands 11 and the tooth flanks 12 of the gear 1 are added, and the following explanation is given mainly about the difference.

In the gear according to the third embodiment of the present invention, as shown in Fig. 14 and Fig. 15, on ridge line portions at intersections between the chamfered portions 112 shaped by forging between the tooth bottom lands 11 and the tooth flanks 12 of the gear 1 and end faces 14 in the axial direction of the gear, chamfered portions 1121 with curvatures different from each other shaped by forging are formed.

Namely, in the gear according to the third embodiment of the present invention, as shown in Fig. 14, joint portions 1121 and 1231 between chamfered portions adjacent to each other formed on the respective ridge line portions at the intersections between the tooth bottom lands 11, the tooth flanks 12, and the tooth tip land 13 of the gear 1 and the end faces 14 in the axial direction of the gear are formed at curvatures that are gradually changed.

In a die 2 as a manufacturing apparatus for manufacturing the gear according to the third embodiment of the present invention, as shown in Fig. 15, chamfered portions 2221 and chamfered portions 2231 are formed between chamfered portions 211, chamfered portions 221, and a chamfered portion 231 respectively corresponding to the tooth bottom lands 11, the tooth flanks 12, and the tooth tip land 13 of the gear 1.

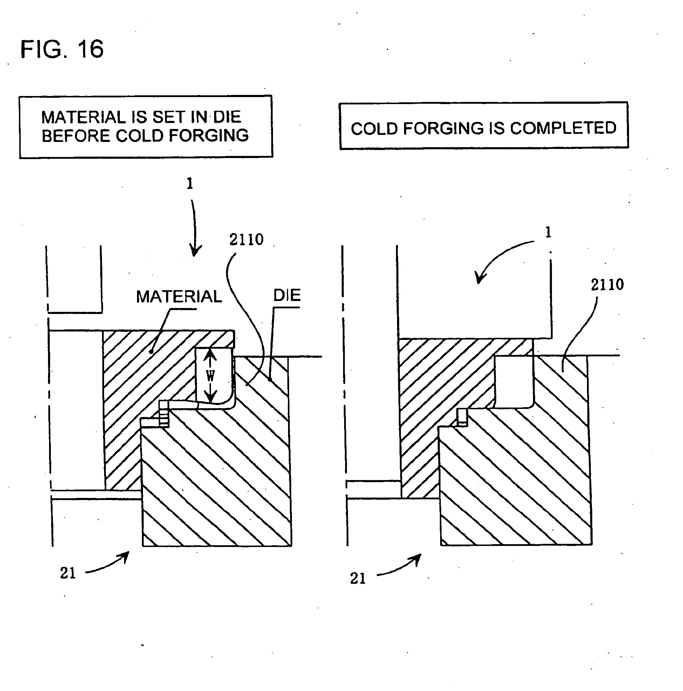

In the third embodiment of the present invention, as shown in Fig. 16, a material shaped in advance so as to increase the tooth width (W in the drawings) of the gear toward the tooth tip inserts dies respectively including chamfered portions for forge-shaping chamfered portions on the respective ridge line portions at the intersections between the tooth bottom lands 11, the tooth flanks 12, and the tooth tip land 13 of the gear and the end faces 14 in the axial direction of the gear, and then the material is shaped by forging.

In the gear according to the third embodiment of the present invention with the above-described configuration, the chamfered portions 112 shaped by forging are formed on straight ridge line portions between the tooth bottom lands 11 and the tooth flanks 12 of the gear, so that an effect is obtained that stress concentration between the tooth bottom lands 11 and the tooth flanks 12 of the gear is avoided.

In addition, in the gear according to the third embodiment of the present invention, joint portions 1121 between chamfered portions 111 and 121, and joint portions 1231 between chamfered portions 121 and 131, adjacent to each other formed on the ridge line portions at the intersections respectively of the tooth bottom lands 11 and the end faces 14 in the axial direction of the gear and the tooth flanks 12 and the end faces 14 in the axial direction of the gear, and of the tooth flanks 12 and the end faces 14 in the axial direction of the gear and the tooth tip land 13 of the gear and the end faces 14 in the axial direction of the gear, are formed at curvatures that are gradually changed, so that an effect is obtained that stress concentration on the joint portions between the chamfered portions adjacent to each other is avoided.

Furthermore, in the gear, manufacturing apparatus and manufacturing method for the gear according to the third embodiment of the present invention, on the respective ridge line portions at intersections between the tooth bottom lands 11, the tooth flanks 12, and the tooth tip land 13 of the gear to be shaped by forging and the end faces 14 in the axial direction of the gear, round chamfered portions are formed by forging, so that the strength of the entire gear is increased, fiber flows at the respective chamfered portions become narrow in intervals in a state that the fiber flows are parallel to each other, and this makes the texture dense and increases resistance against stress concentration, and furthermore, machining such as cutting to remove burrs caused by hobbing in the conventional techniques is not necessary, so that an effect is obtained that lowering in strength is prevented and the machining cost is reduced.

Namely, in the third embodiment of the present invention, as shown in Fig. 16, a material shaped in advance so as to increase the tooth width (W in the drawings) of the gear inserts dies respectively including chamfered portions for forge-shaping chamfered portions on the respective ridge line portions at the intersections between the tooth bottom lands 11, the tooth flanks 12, and the tooth tip land 13 of the gear and the end faces 14 in the axial direction of the gear, and then shaped by forging.

This aims at complete filling of the material into the die by forging, and this case is characterized in that the shape of the material before being forged is devised so that the thickness flow goes to the tooth tip of the gear. By shaping so that the tooth width (W in the drawings) of the gear increases toward the tooth tip as shown in Fig. 16, the volume (bulk) can be made the same, so that forging of a round shape is realized.

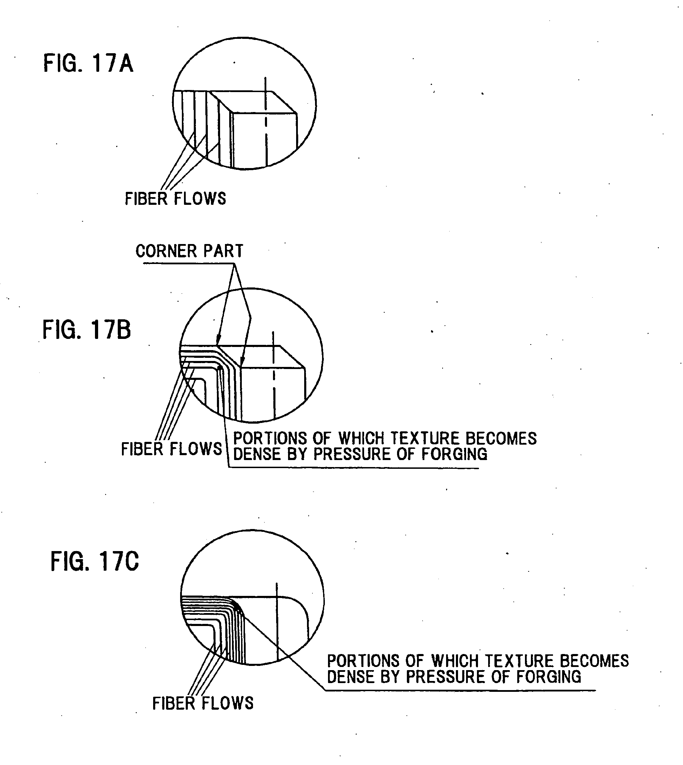

In the third embodiment of the present invention, chamfering on the respective chamfered portions 111, 121, and 131 are tangent round chamfering by forging as shown in Fig. 17C. Therefore, different from the machine chamfering shown in Fig. 17A, the fiber flows are not cut, and the texture at the chamfered portion becomes dense, and in comparison with the straight chamfering shown in Fig. 17B, no corner where the texture becomes dense is formed, so that stress concentration is unlikely to occur.

Namely, in the case of machine chamfering involving hobbing, cutting, and other machining after forging, fiber flows are cut as shown in Fig. 17A. Furthermore, in the case of the straight chamfering by forging as shown in Fig. 17B, although the fiber flows are not cut, the chamfered portion includes a corner where the texture becomes partially dense, so that the density of the texture or the interval gap between adjacent fiber flows fluctuates depending on the locations of the corner and occurrence of stress concentration is inevitable.

The manufacturing apparatus and method according to the third embodiment of the present invention provides a high-strength engaging gear in which stress concentration is minimized, and the conventional machining after forging for chamfering is omitted, so that a manufacturing process of high productivity is provided, and furthermore, burnishing is omitted, so that a high-quality gear can be provided.

In the third embodiment of the present invention, at a portion (involute) of the gear where accuracy is necessary, the round is made small to secure a high-accuracy range, and at a portion (fillet) where strength is necessary, the round is made larger to secure the strength. At a portion that should not be engaged (forged surface side of the tooth tip), the round is made larger to make this portion escape so as not to be engaged.

The tooth profile shaping by forging and round chamfering on the ridge lines at the intersections between the respective portions around the tooth flanks are simultaneously performed, so that the target shape can be shaped by forging with a die in which the coupling of the tooth flank with the end face of the product is not straight but is rounded at a predetermined constant curvature or a curvature which is gradually changed.

In the third embodiment, in the hot forging and cold forging, the product to be inserted into the die is turned upside down and shaped in two processes.

The important point is that, for even full filling in the cold forging mainly for chamfering and shaping the chamfered portions, the respective tooth profile sections in the hot forging are partially underfilled. Namely, the tooth width is set so as to increase toward the tooth tip.

The straight chamfering (Fig. 17B) in the conventional techniques has disadvantages that the gear strength cannot be secured, and if anything, the accuracy of the engaging surfaces is lowered due to forging chamfering. However, in the third embodiment of the present invention, stress concentration on the weakest sections is remarkably relaxed, and a gear with strength higher than that in the conventional techniques can be formed.

In the third embodiment of the present invention, the chamfered portions are simultaneously formed when the tooth profile is formed, so that the chamfering process in the conventional techniques can be omitted, high productivity is obtained, and since all peripheries of the tooth flanks are rounded like R-shape or round shape, dents (dents and other flaws) occurring during manufacturing processes can be prevented from harmfully influencing the engagement performance.

### Fourth Embodiment

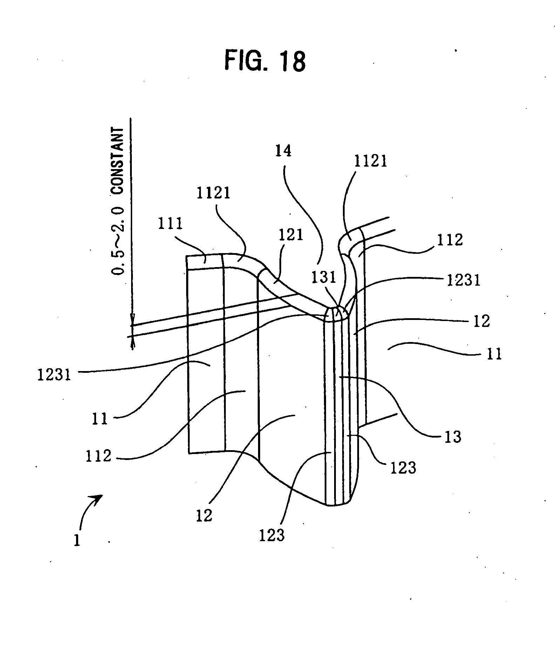

A gear according to a fourth embodiment not having all features of the present invention is mainly different in that the present invention is applied to a spur gear as shown in Fig. 18, and the following explanation is mainly given about the difference.

In the gear according to the fourth embodiment, as shown in Fig. 18, chamfered portions 112 and 123 are formed between the tooth bottom lands 11 and the tooth flanks 12 and between the tooth flanks 12 and the tooth tip land 13 of the gear 1, and chamfered portions 111, 121, and 131 adjacent to each other of the tooth bottom lands 11, the tooth flanks 12, and the tooth tip land 13 of the gear 1 are respectively formed by round chamfering at a predetermined constant curvature (0.5 through 2.0).

Namely, in the gear joint portions 1121 and 1231 between the chamfered portions 111, 121, and 131 adjacent to each other formed on the respective ridge line portions at the intersections with the end faces 14 in the axial direction of the gear are formed at a predetermined constant curvature.

The gear according to the fourth embodiment of the present invention brings about the same working effect as in the first embodiment described above.

### Fifth Embodiment

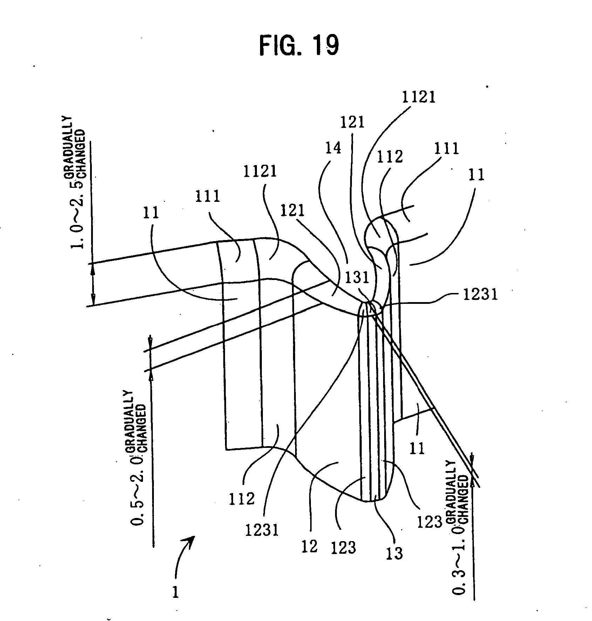

A gear according to a fifth embodiment of the present invention is mainly different from the fourth embodiment described above in that the respective chamfered portions 111, 121, and 131 formed on the respective ridge line portions at the intersections between the tooth bottom lands 11, the tooth flanks 12, and the tooth tip land 13 of the gear 1 and the end faces 14 in the axial direction of the gear 1 are formed by round chamfering at curvatures that are gradually changed as shown in Fig. 19.

The gear according to the fifth embodiment of the present invention brings about the same working effect as in the second embodiment and the third embodiment described above.

The preferred embodiments of the present invention, as herein disclosed are taken as some embodiments for explaining the present invention. It is to be understood that the present invention should not be restricted by these embodiments and any modifications and additions are possible so far as they are not beyond the technical idea or principle based on descriptions of the scope of the patent claims.

In the second embodiment described above, an example is explained in which round chamfered portions 111, 121, and 131 are formed on the respective ridge line portions of the end faces 14 in the axial direction of the gear in the hot forging process and the cold forging process, however, the invention is not limited to this, and for example, it is also allowed that round chamfering is performed only in the cold forging process, or one end in the axial direction of the gear is round chamfered in a plurality of cold forging processes, and then the other end in the axial direction of the gear is round chamfered. Furthermore, it is also possible that one end in the axial direction of the gear is round chamfered in a plurality of cold forging processes to respectively form the chamfered portions 111, 121, and 131 of the tooth bottom lands 11, the tooth flanks 12, the tooth tip land 13 in order.

### Industrial Applicability

The gear has forged chamfered portions on the respective ridge line portions at intersections between tooth bottom lands, tooth flanks, and a tooth tip land of the gear and end faces in the axial direction of the gear, and the gear does not need machining such as cutting to remove burrs caused by hobbing in the conventional techniques, so that the gear can be applied to an application that prevents lowering in strength and reduces the machining cost.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A gear, wherein
forged chamfered portions (111, 121, 131) are formed on the respective ridge line portions at intersections between tooth bottom lands (11), tooth flanks (12), and a tooth tip land (13) of the gear and end faces (14) in the axial direction of the gear,
**characterized in that**
forged chamfered portions (112) are further formed on straight ridge line portions between the tooth bottom lands (11) and the tooth flanks (12) of the gear,
said forged chamfered portions (111, 121, 131) formed on ridge line portions at intersections between the tooth bottom lands (11), the tooth flanks (12), and the tooth tip land (13) of the gear and the end faces (14) in the axial direction of the gear are respectively formed by round chamfering and
the curvatures of said round chamfering are different from each other.

2. The gear according to Claim 1, wherein
forged chamfered portions (123) are further formed on straight ridge line portions between the tooth flanks (12) and the tooth tip land (13) of the gear.

3. The gear according to Claim 1 or 2, wherein
forged chamfered portions (1121) are further formed on ridge line portions at intersections between said forged chamfered portions (111, 121) between the tooth bottom lands (11) and the tooth flanks (12) of the gear and end faces (14) in the axial direction of the gear.

4. The gear according to any one of claims 1 through 3, wherein
forged chamfered portions (1231) are further formed on ridge line portions at intersections between said forged chamfered portions (121, 131) between the tooth flanks (12) and the tooth tip land (13) of the gear and end faces (14) in the axial direction of the gear.

5. The gear according to any one of Claims 1 through 4, wherein
joint portions (1121, 1231) between forged chamfered portions adjacent to each other formed on ridge line portions at intersections between the tooth bottom lands (11), the tooth flanks (12), and the tooth tip land (13) of the gear and the end faces (14) in the axial direction of the gear are formed at a curvature that is gradually changed.

6. The gear according to any one of Claims 1 through 5, wherein
round forged chamfered portions (111, 121, 131) are formed on the respective ridge line portions at intersections between the tooth bottom lands (11), the tooth flanks (12), and the tooth tip land (13) of the gear to be shaped by forging and end faces (14) in the axial direction of the gear.

7. The gear according to any one of claims 1 through 6, wherein
said forged chamfered portions (111, 112, 121, 123, 131, 1121, 1231) comprise chamfered portions formed by filling a work as said gear in a die (210, 220) having chamfered portions (211, 221, 222, 231, 2221, 2231).

8. The gear according to claim 7, wherein
said work has end faces (14) machined after forging thereof.

9. The gear according to claim 8, wherein
said forged chamfered portions (111, 112, 121, 123, 131, 1121, 1231) comprise chamfered portions formed by inserting said machined work into a forging die (210, 220) having chamfered portions (211, 221, 222, 231, 2221, 2231).

10. The gear according to claim 9, wherein
the volume of said forging die (210, 220) is calculated.

11. The gear according to claim 10, wherein
said forged chamfered portions (111, 112, 121, 123, 131, 1121, 1231) comprise chamfered portions formed by inserting said machined work into said die (210, 220) by switching the upper side and the lower side thereof.

## Patentansprüche

1. Zahnrad, bei dem
geschmiedete abgefaste Bereiche (111, 121, 131) auf den jeweiligen Kammlinienbereichen an Schnittstellen zwischen Zahnfussbodenflächen (11), Zahnflanken (12) und einer Zahnspitzenoberfläche (13) des Zahnrads, und Stirnflächen (14) in der Axialrichtung des Zahnrads geformt sind,
**dadurch gekennzeichnet, dass**
außerdem geschmiedete abgefaste Bereiche (112) auf geraden Kammlinienbereichen zwischen den Zahnfussbodenflächen (11) und den Zahnflanken (12) des Zahnrads geformt sind, wobei
die geschmiedeten abgefasten Bereiche (111, 121, 131), die auf Kammlinienbereichen an Schnittstellen zwischen den Zahnfussbodenflächen (11), den Zahnflanken (12) und der Zahnspitzenoberfläche (13) des Zahnrads, und den Stirnflächen (14) in der Axialrichtung des Zahnrads geformt sind, jeweils durch Rundabfasen geformt sind, und
die Krümmungen des Rundabfasens verschieden zueinander sind.

2. Zahnrad nach Anspruch 1, bei dem
außerdem geschmiedete abgefaste Bereiche (123) auf geraden Kammlinienbereichen zwischen den Zahnflanken (12) und der Zahnspitzenoberfläche (13) des Zahnrads geformt sind.

3. Zahnrad nach Anspruch 1 oder 2, bei dem
außerdem geschmiedete abgefaste Bereiche (1121) auf Kammlinienbereichen an Schnittstellen zwischen den geschmiedeten abgefasten Bereichen (111, 121), zwischen den Zahnfussbodenflächen (11) und den Zahnflanken (12) des Zahnrads und Stirnflächen (14) in der Axialrichtung des Zahnrads geformt sind.

4. Zahnrad nach einem der Ansprüche 1 bis 3, bei dem
außerdem geschmiedete abgefaste Bereiche (1231) auf Kammlinienbereichen an Schnittstellen zwischen den geschmiedeten abgefasten Bereichen (121, 131), zwischen den Zahnflanken (12) und der Zahnspitzenoberfläche (13) des Zahnrads und Stirnflächen (14) in der Axialrichtung des Zahnrads geformt sind.

5. Zahnrad nach einem der Ansprüche 1 bis 4, bei dem
Verbindungsstellenbereiche (1121, 1231) zwischen geschmiedeten abgefasten Bereichen, die benachbart zueinander sind und auf Kammlinienbereichen an Schnittstellen zwischen der Zahnfussbodenflächen (11), den Zahnflanken (12) und der Zahnspitzenoberfläche (13) des Zahnrads, und Stirnflächen (14) in der Axialrichtung des Zahnrads geformt sind, mit einer Krümmung geformt sind, die graduell verändert ist.

6. Zahnrad nach einem der Ansprüche 1 bis 5, bei dem
rund geschmiedete abgefaste Bereiche (111, 121, 131) auf den jeweiligen Kammlinienbereichen an Schnittstellen zwischen den Zahnfussbodenflächen (11), den Zahnflanken (12) und der Zahnspitzenoberfläche (13) des Zahnrads, das durch Schmieden herzustellen ist, und Stirnflächen (14) in der Axialrichtung des Zahnrads geformt sind.

7. Zahnrad nach einem der Ansprüche 1 bis 6, bei dem
die geschmiedeten abgefasten Bereiche (111, 112, 121, 123, 131, 1121, 1231) abgefaste Bereiche aufweisen, die durch Einbringen eines Werkstücks als das Zahnrad in ein Werkzeug (210, 220), das abgefaste Bereiche (211, 221, 222, 231, 2221, 2231) aufweist, geformt werden.

8. Zahnrad nach Anspruch 7, bei dem
das Werkstück Stirnflächen (14) aufweist, die nach dem Schmieden desselben bearbeitet werden.

9. Zahnrad nach Anspruch 8, bei dem
die geschmiedeten abgefasten Bereiche (111, 112, 121, 123, 131, 1121, 1231) abgefaste Bereiche aufweisen, die durch Einsetzen des bearbeiteten Werkstücks in ein Schmiedewerkzeug (210, 220), das abgefaste Bereiche (211, 221, 222, 231, 2221, 2231) aufweist, geformt werden.

10. Zahnrad nach Anspruch 9, bei dem
das Volumen des Schmiedewerkzeugs (210, 220) berechnet ist.

11. Zahnrad nach Anspruch 10, bei dem
die geschmiedeten abgefasten Bereiche (111, 112, 121, 123, 131, 1121, 1231) abgefaste Bereiche aufweisen, die durch Einsetzen des bearbeiteten Werkstücks in das Werkzeug (210, 220) durch Vertauschen der oberen Seite und der unteren Seite davon geformt werden.

## Revendications

1. Roue dentée, dans laquelle :
des portions chanfreinées forgées (111, 121, 131) sont formées sur les portions de lignes de nervures respectives aux intersections entre les méplats inférieurs de dents (11), les flancs de dents (12), et un méplat de pointe de dent (13) de la roue dentée et les faces d'extrémité (14) dans la direction axiale de la roue dentée, **caractérisée en ce que**
des portions chanfreinées forgées (112) sont en outre formées sur des portions de lignes de nervures droites entre les méplats inférieurs de dents (11) et les flancs de dents (12) de la roue dentée, lesdites portions chanfreinées forgées (111, 121, 131) formées sur les portions de lignes de nervures aux intersections entre les méplats inférieurs de dents (11) et les flancs de dents (12), et le méplat de pointe de dents (13) de la roue dentée et les faces d'extrémité (14) dans la direction axiale de la roue dentée sont respectivement formées par chanfreinage circulaire, et
les courbures dudit chanfreinage circulaire sont différentes l'une de l'autre.

2. Roue dentée selon la revendication 1, dans laquelle :
des portions chanfreinées forgées (123) sont en outre
formées sur des portions de lignes de nervures droites entre les flancs de dents (12) et le méplat de pointe de dent (13) de la roue dentée.

3. Roue dentée selon la revendication 1 ou 2, dans laquelle :
des portions chanfreinées forgées (1121) sont en outre
formées sur les portions de lignes de nervures aux intersections entre lesdites portions chanfreinées forgées (111, 121) entre les méplats inférieurs de dents (11) et les flancs de dents (13) de la roue dentée et les faces d'extrémité (14) dans la direction axiale de la roue dentée.

4. Roue dentée selon l'une quelconque des revendications 1 à 3, dans laquelle :
des portions chanfreinées forgées (1231) sont en outre
formées sur les portions de lignes de nervures aux intersections entre lesdites portions chanfreinées forgées (121, 131) entre les flancs de dents (12) et le méplat de pointe de dent (13) de la roue dentée et les faces d'extrémité (14) dans la direction axiale de la roue dentée.

5. Roue dentée selon l'une quelconque des revendications 1 à 4, dans laquelle des portions d'articulation (1121, 1131) entre les portions chanfreinées forgées adjacentes l'une à l'autre formées sur les portions de lignes de nervures aux intersections entre les méplats inférieurs de dents (11), les flancs de dents (12), et le méplat de pointe de dent (13) de la roue dentée et les faces d'extrémité (14) dans la direction axiale de la roue dentée sont formées selon une courbure qui varie graduellement.

6. Roue dentée selon l'une quelconque des revendications 1 à 5, dans laquelle :
des portions chanfreinées forgées (111, 121, 131) sont
formées sur les portions de lignes de nervures respectives aux intersections entre les méplats inférieurs de dents (11), les flancs de dents (12), et le méplat de pointe de dent (13) de la roue dentée à façonner par forgeage et les faces d'extrémité (14) dans la direction axiale de la roue dentée.

7. Roue dentée selon l'une quelconque des revendications 1 à 6, dans laquelle :
lesdites portions chanfreinées forgées (111, 112, 121, 123, 131, 1121, 1231) comprennent des portions chanfreinées formées en chargeant une pièce comme dite roue dentée dans une filière (210, 220) ayant des portions chanfreinées (211, 221, 222, 231, 2221, 2231).

8. Roue dentée selon la revendication 7, dans laquelle :
ladite pièce a des faces d'extrémité (14) usinées
après leur forgeage.

9. Roue dentée selon la revendication 8, dans laquelle :
lesdites portions chanfreinées forgées (111, 112, 121, 123, 131, 1121, 1231) comprennent des portions chanfreinées formées en insérant ladite pièce usinée dans une filière de forgeage (210, 220) ayant des portions chanfreinées (211, 221, 222, 231, 2221, 2231).

10. Roue dentée selon la revendication 9, dans laquelle :
le volume de ladite filière de forgeage (210, 220) est
calculé.

11. Roue dentée selon la revendication 10, dans laquelle :
lesdites portions chanfreinées forgées (111, 112, 121, 123, 131, 1121, 1231) comprennent des portions chanfreinées formées en insérant ladite pièce usinée dans ladite filière (210, 220) en commutant son côté supérieur et son côté inférieur.
